# EUROPÄISCHE PATENTSCHRIFT

(11) **EP 4 130 510 B1**
(45) Veröffentlichungstag und Bekanntmachung des Hinweises auf die Patenterteilung: **27.12.2023**
(21) Anmeldenummer: 22184161.2
(22) Anmeldetag: 11.07.2022
(51) Int. Cl.: F16F 9/02, F16F 9/512, F16F 9/516, F16F 9/348, E05F 1/10, E05F 3/12, E05F 5/02, E05F 15/00, E05F 5/10

(54) **FLUIDDÄMPFER MIT EINEM SCHALTKOLBEN, VERFAHREN ZUR HERSTELLUNG DES FLUIDDÄMPFERS, ANTRIEBSANORDNUNG MIT DEM FLUIDDÄMPFER**
FLUID DAMPER WITH A SWITCHING PISTON, METHOD OF MANUFACTURING THE FLUID DAMPER, DRIVE ASSEMBLY WITH THE FLUID DAMPER
AMORTISSEUR À FLUIDE DOTÉ D'UN PISTON DE COMMUTATION, PROCÉDÉ DE FABRICATION DE L'AMORTISSEUR À FLUIDE, DISPOSITIF D'ENTRAÎNEMENT POURVU D'AMORTISSEUR À FLUIDE

(30) Priorität: 21.07.2021 DE 102021118893; 29.09.2021 DE 102021125203
(43) Veröffentlichungstag der Anmeldung: 08.02.2023
(73) Patentinhaber: STABILUS GmbH, 56070 Koblenz (DE)
(72) Erfinder: Schneider, Michael, 56299 Ochtendung (DE); Lischetzki, Christoph, 56626 Andernach (DE); Seus-Kapellen, Andreas, 56154 Boppard-Udenhausen (DE); Enders, Stephan, 56072 Koblenz (DE)
(74) Vertreter: Bernsmann, Falk

(56) Entgegenhaltungen:
- WO-A1-2014/032064
- WO-A1-2018/173747
- DE-A1- 1 817 391
- DE-A1- 2 923 872
- DE-A1-102018 221 224
- DE-U1- 20 107 426
- DE-U1-202006 015 153
- SU-A1- 1 629 643
- US-B2- 10 330 169

## Beschreibung

### Technisches Gebiet

Die Erfindung betrifft einen Fluiddämpfer, umfassend einen mit einem Dämpfungsfluid gefüllten Zylinder, einen in dem Zylinder entlang einer Hubachse verschieblich geführten Kolbengrundkörper und eine von einer Mantelwand des Zylinders beabstandete Ventilscheibe. Der Kolbengrundkörper teilt einen Innenraum des Zylinders entlang der Hubachse in einen vorderen Teilraum und einen hinteren Teilraum. In dem Kolbengrundkörper ist zumindest ein den vorderen Teilraum mit dem hinteren Teilraum fluidleitend verbindender Kanal. Die Ventilscheibe ist entlang der Hubachse zwischen einer den zumindest einen Kanal freigebenden Öffnungsposition und einer den zumindest einen Kanal verschließenden Schließposition verschieblich geführt.

Die Erfindung betrifft ferner ein Verfahren zur Herstellung des Fluiddämpfers und eine Antriebsanordnung mit dem Fluiddämpfer.

### Stand der Technik

Bei einseitigen Klappenantrieben ist für den Versagensfall der angetriebenen Seite in der Regel eine Einschubdämpfung der passiven Seite (Federbein) vorgesehen. Damit im Normalbetrieb keine nachteiligen permanenten Dämpfungskräfte auftreten, soll die Einschubdämpfung nur ab einem definierten Schwellenwert zugeschaltet werden. Dieser Schwellenwert liegt bei automatischen Hecklappen nur sehr knapp oberhalb der normalen Einschubgeschwindigkeit.

In der beschriebenen Anwendung soll eine Gasfeder als Verstellelement bei hohen Einschubgeschwindigkeiten (Crashfall, zu hohe Betätigungsgeschwindigkeiten etc.) eine zusätzliche Drosselung/Blockierung hinzuschalten, welche das Gesamtsystem oder Benutzer vor zu hohen Belastungen/Geschwindigkeiten schützt.

Bekannte Gasfedern mit geschwindigkeitsabhängiger Dämpfkraft haben zu viele Bauteile, sind nicht auf kleinere Durchmesser der Gasfeder skalierbar, haben einen unpräzisen Schaltpunkt durch eine Vielzahl beteiligter Bauteile mit sich addierenden Fehlertoleranzen und zeigen ein instabiles Schaltverhalten durch eine Vielzahl beteiligter Bauteil mit relativ großer Trägheit und hohen Reibkräften.

Die Druckschrift EP 0 409 094 A1 beschreibt einen Fluiddämpfer mit einem Schaltkolben, der einen an einer Kolbenstange befestigten Grundkörper mit umlaufender Dichtung hat. Der Grundkörper bildet eine Führungshülse, in der ein kreisscheibenförmiger Ventilkörper mit ringsegmentförmigen Aussparungen und einer zentralen Aussparung gegen ein Federelement entlang der Hubachse des Fluiddämpfers aus einer Öffnungsposition in eine einen Kanal durch den Grundkörper schließende Schließposition verschieblich ist.

Die Druckschriften DE 101 40 580 A1, DE 196 49 836 A1, US 5 730 260 A und DE 10 2006 030 064 A1 offenbaren ebenfalls Fluiddämpfer mit jeweils einem Schaltkolben, der einen an einer Kolbenstange befestigten Grundkörper mit umlaufender Dichtung hat. Der Schaltkolben umfasst ferner einen Ventilkörper, der an dem Grundkörper entlang einer Hubachse des Fluiddämpfers aus einer Öffnungsposition in eine einen Kanal durch den Grundkörper schließende Schließposition verschieblich geführt ist.

Das Dokument SU1629643A1 offenbart einen Fluiddämpfer gemäß dem Oberbegriff des Anspruchs 1.

### Technische Aufgabe

Die Aufgabe der Erfindung ist es, einen möglichst einfach aufgebauten Fluiddämpfer und ein kostengünstiges und zuverlässiges Herstellungsverfahren für den Fluiddämpfer zu schaffen, wobei der Fluiddämpfer eine Einschubgeschwindigkeit eines Kolbens des Fluiddämpfers oberhalb einer genau definierten Schaltgeschwindigkeit zuverlässig abbremst.

### Technische Lösung

Die vorliegende Erfindung stellt einen Fluiddämpfer gemäß Anspruch 1 bereit, der die technische Aufgabe löst. Ebenso wird die Aufgabe durch ein Verfahren zur Herstellung des Fluiddämpfers gemäß Anspruch 12 und durch eine Antriebsanordnung gemäß Anspruch 13 gelöst. Vorteilhafte Ausgestaltungen ergeben sich aus den abhängigen Ansprüchen.

Der Fluiddämpfer umfasst einen mit einem Dämpfungsfluid gefüllten Zylinder. Das Dämpfungsfluid ist vorzugsweise ein Gas und/oder steht unter einem Überdruck relativ zu einer Umgebung des Zylinders. Der Zylinder ist vorzugsweise als Druckrohr ausgebildet.

Der Fluiddämpfer umfasst einen in dem Zylinder entlang einer Hubachse verschieblich geführten Kolbengrundkörper. Der Zylinder ist vorzugsweise hohlzylindrisch geformt und/oder koaxial zu der Hubachse angeordnet.

Der Fluiddämpfer umfasst eine von einer Mantelwand des Zylinders beabstandete Ventilscheibe. Die Ventilscheibe ist vorzugsweise scheibenförmig, insbesondere kreisscheibenförmig und/oder senkrecht zur Hubachse ausgerichtet. Die Hubachse verläuft bevorzugt durch einen Mittelpunkt der Ventilscheibe.

Dadurch, dass die Ventilscheibe von der Mantelwand beabstandet ist, wird eine Schaltfunktion der Ventilscheibe nicht durch Reibkräfte zwischen der Ventilscheibe und der Mantelwand beeinträchtigt, sodass sich ein besonders präzises Schaltverhalten ergibt. Die Beabstandung erlaubt außerdem große Drosselquerschnitte und niedrige Ventilfederkräfte, die einen präzisen Schaltpunkt und geringe Widerstände im Normalbetrieb sowie geringe Störungen durch Öltropfen in kleinen Querschnitten bewirken.

Die Ventilscheibe ist vorzugsweise in einer Vertiefung des Kolbengrundkörpers, beispielsweise in einer zur Hubachse koaxialen Bohrung in dem Kolbengrundkörper, angeordnet. Die Anordnung in einer Vertiefung verhindert, dass die Ventilscheibe mit dem Zylinder in Kontakt kommt, wodurch das Schaltverhalten der Ventilscheibe beeinträchtigt werden könnte.

Der Kolbengrundkörper teilt einen Innenraum des Zylinders entlang der Hubachse in einen vorderen Teilraum und einen hinteren Teilraum, wobei in dem Kolbengrundkörper zumindest ein den vorderen Teilraum mit dem hinteren Teilraum fluidleitend verbindender Kanal angeordnet ist. Vorzugsweise ist der zumindest eine Kanal die einzige fluidleitende Verbindung zwischen dem vorderen Teilraum und dem hinteren Teilraum. Wird der Kolbengrundkörper in dem Zylinder entlang der Hubachse verschoben, kann das Dämpfungsfluid durch den Kanal von dem vorderen Teilraum in den hinteren Teilraum strömen oder umgekehrt. Ein Strömungswiderstand des Dämpfungsfluides in dem Kanal bestimmt dabei die Dämpfkraft die der Fluiddämpfer der Verschiebung des Kolbengrundkörpers entgegensetzt. Der Strömungswiderstand bestimmt also, welche Dämpfkraft der Fluiddämpfer einer Bewegung von durch den Fluiddämpfer miteinander verbundenen Bauteilen relativ zueinander entgegensetzt.

Der Fluiddämpfer ist vorzugsweise so ausgestaltet, dass sich der Kolbengrundkörper bei einer Einschubbewegung des Fluiddämpfers in einer Einschubrichtung von dem hinteren Teilraum zum vorderen Teilraum bewegt. Der vordere Teilraum und der hintere Teilraum können gegeneinander vertauscht sein.

Die Ventilscheibe ist relativ zu dem Kolbengrundkörper entlang der Hubachse zwischen einer den zumindest einen Kanal freigebenden Öffnungsposition und einer den zumindest einen Kanal verschließenden Schließposition verschieblich geführt. Die Begriffe "freigeben" und "verschließen" bedeuten, dass minimale Querschnittsfläche des Kanals für das Dämpfungsfluid in der Schließposition relativ zu der Öffnungsposition wesentlich reduziert ist, beispielsweise um 75 % bis 100 %, insbesondere um 85 % bis 100 %, vorzugsweise um 95 % bis 99 %.

Vorzugsweise ist der Kanal in der Schließposition nicht vollständig verschlossen, sodass der Kolbengrundkörper nicht in dem Zylinder blockiert wird, sondern langsam weiterbewegt werden kann, beispielsweise um eine von dem Fluiddämpfer unterstützte Klappe langsam zu schließen.

Der Kolbengrundkörper und die Ventilscheibe bilden somit zusammen einen Schaltkolben, mit dem die Dämpfkraft des Fluiddämpfers durch eine Verschiebung der Ventilscheibe von der Öffnungsposition in die Schließposition erhöht werden kann. Die Schaltfunktion kann vorteilhafterweise mit weniger beteiligten Bauteilen realisiert werden als im Stand der Technik, wodurch die Herstellung des Schaltkolbens vereinfacht wird. Vorzugsweise erfordert der Fluiddämpfer einen geringen Entwicklungsaufwand durch einen konventionellen Systemaufbau, einfache Bauteile (Stanz- und/oder Drehteile) und wenige Bauteile, beispielsweise 5 Bauteile des Schaltkolbens statt 6 bei einem bekannten Schaltkolben.

Die Ventilscheibe wird vorzugsweise von der Öffnungsposition in die Schließposition verschoben, wenn ein Überdruck in dem vorderen Teilraum relativ zu dem hinteren Teilraum einen Schaltdruck übersteigt. Der Überdruck ist beispielsweise ein Staudruck, der entsteht, wenn sich der Kolbengrundkörper in einer Einschubrichtung von dem hinteren Teilraum zum vorderen Teilraum entlang der Hubachse bewegt. Zur Staudruckbildung kommt es, wenn der durch die Bewegung des Kolbengrundkörpers verdrängte Volumenstrom des Dämpfungsfluides größer ist als der durch den Kanal mögliche Volumenstrom.

Wenn eine Geschwindigkeit der Bewegung des Kolbengrundkörpers eine Schaltgeschwindigkeit überschreitet, überschreitet der Überdruck den Schaltdruck, sodass die Ventilscheibe in die Schließposition verschoben wird. Dadurch erhöht sich die Dämpfkraft des Fluiddämpfers und die Bewegung des Kolbengrundkörpers wird gebremst, sodass eine zu hohe Geschwindigkeit, die zu einer Beschädigung des Fluiddämpfers oder daran angeschlossener Bauteile oder zu einer Verletzungsgefahr führen könnte, verhindert wird.

Vorzugsweise kann über die Größe der minimalen Querschnittsfläche des Kanals in der Schließposition die Geschwindigkeit des Kolbengrundkörpers nach dem Schalten in die Schließposition eingestellt werden.

Wenn der Überdruck in dem vorderen Teilraum geringer ist als der Schaltdruck, oder wenn in dem vorderen Teilraum relativ zu dem hinteren Teilraum ein Unterdruck herrscht, befindet sich die Ventilscheibe vorzugsweise in der Öffnungsposition. D. h., wenn sich der Kolbengrundkörper mit einer Geschwindigkeit unterhalb der Schaltgeschwindigkeit in der Einschubrichtung bewegt, oder wenn sich der Kolbengrundkörper in einer der Einschubrichtung entgegengesetzten Auszugsrichtung bewegt, ist die Dämpfkraft des Fluiddämpfers gering. Somit lassen sich über den Fluiddämpfer miteinander verbundene Bauteile mit einer Geschwindigkeit unterhalb der Schaltgeschwindigkeit in der Einschubrichtung sowie mit einer beliebigen Geschwindigkeit in der Auszugsrichtung mit geringem Energieaufwand relativ zueinander bewegen. Dadurch kann beispielsweise eine von dem Fluiddämpfer unterstützte Klappe im Normalbetrieb, d. h. zum Öffnen der Klappe und zum Schließen Klappe mit einer Geschwindigkeit unterhalb der Schaltgeschwindigkeit, leichtgängig bewegt werden.

Die Ventilscheibe weist einen sich von der Hubachse radial nach außen erstreckenden Zentralbereich auf, wobei der Zentralbereich durchbrechungsfrei ist. Dadurch steht im Zentralbereich eine große und von der Position der Ventilscheibe relativ zum Kolbengrundkörper unabhängige Fläche ohne Durchbrechungen entlang der Hubachse zur Verfügung, auf die ein Überdruck in dem vorderen oder hinteren Teilraum wirken kann, um eine große und von der Position der Ventilscheibe unabhängige Kraft zur Verschiebung der Ventilscheibe zu bewirken. Somit wird unabhängig von möglichen Reibkräften auf die Ventilscheibe ein besonders zuverlässiges und präzises Schaltverhalten der Ventilscheibe von der Öffnungsposition in die Schließposition und umgekehrt erreicht.

### Beschreibung der Ausführungsarten

Der durchbrechungsfreie Zentralbereich erstreckt sich vorzugsweise von der Hubachse bis zu einem Zentralbereichsradius nach außen, wobei der Zentralbereichsradius von 50 % bis 100 %, bevorzugt von 75 % bis 98 %, besonders bevorzugt von 85 % bis 95 %, eines zur Hubachse radialen Ventilscheibenradius der Ventilscheibe beträgt. In Versuchen haben die genannten Werte des Zentralbereichsradius zu einem besonders zuverlässigen Schaltverhalten der Ventilscheibe geführt.

Die Ventilscheibe weist vorzugsweise außerhalb des Zentralbereichs eine Anzahl von, beispielsweise ein, zwei, drei, vier, fünf oder mehr, bevorzugt ringsegmentförmigen, Aussparungen zum Durchtritt des Dämpfungsfluides entlang der Hubachse durch die Ventilscheibe auf, wobei die Aussparungen bevorzugt radial von der Hubachse nach außen offen sind. Die Aussparungen definieren einen Drosselquerschnitt für das Dämpfungsfluid. Durch eine Variation der Querschnittsfläche und/oder der Anzahl der Aussparungen kann der Drosselquerschnitt und somit die Dämpfkraft des Fluiddämpfers eingestellt werden. Besonders einfach und toleranzneutral lässt sich der Drosselquerschnitt durch eine Variation der in Umfangsrichtung um die Hubachse gemessenen Breite von Stegen zwischen den Aussparungen einstellen.

Die Stege zwischen den Aussparungen können zur Führung der Ventilscheibe an dem Kolbengrundkörper und/oder an einem Führungselement dienen. Die Stege können die Ventilscheibe vorteilhafterweise ohne erhöhte Gefahr eines Verkantens an dem Kolbengrundkörper und/oder an dem Führungselement auf der Hubachse zentrieren. Besonders bevorzugt weist die Ventilscheibe drei nach außen offene Aussparungen auf. Dadurch ergeben sich zwischen den Aussparungen drei Stege zur Führung der Ventilscheibe an dem Kolbengrundkörper und/oder an dem Führungselement.

Der Fluiddämpfer umfasst vorzugsweise ein an dem Kolbengrundkörper befestigtes und zwischen der Ventilscheibe und einer Mantelwand des Zylinders angeordnetes Führungselement, das die Ventilscheibe entlang der Hubachse zwischen der Öffnungsposition und der Schließposition verschieblich führt. Das Führungselement verhindert, dass die Ventilscheibe mit dem Zylinder in Kontakt kommt, wodurch das Schaltverhalten der Ventilscheibe beeinträchtigt werden könnte.

Das Führungselement ist vorzugsweise als Führungshülse ausgestaltet und/oder koaxial zur Hubachse angeordnet. Das Führungselement kann kraftschlüssig, formschlüssig, stoffschlüssig und/oder einstückig mit dem Kolbengrundkörper verbunden sein. Vorzugsweise ist das Führungselement formschlüssig und/oder einstückig mit dem Kolbengrundkörper verbunden, wodurch eine einfache Herstellung und eine zuverlässige Verbindung gewährleistet werden.

Der Fluiddämpfer kann ein Halteelement zur Halterung des Führungselements an dem Kolbengrundkörper umfassen. Das Halteelement ist beispielsweise über eine Rastverbindung und/oder formschlüssig mit dem Kolbengrundkörper und mit dem Führungselement verbunden.

Die Ventilscheibe ist vorzugsweise ausschließlich durch das Führungselement geführt. Dadurch werden auf die Ventilscheibe wirkende Reibkräfte minimiert, sodass sich ein besonders präzises Schaltverhalten ergibt.

Der Fluiddämpfer umfasst gemäß der Erfindung zumindest einen an dem Kolbengrundkörper befestigten Anschlag zur Begrenzung der Verschieblichkeit der Ventilscheibe relativ zu dem Kolbengrundkörper in einer Öffnungsrichtung von der Schließposition zur Öffnungsposition. Der Anschlag kann mit dem Kolbengrundkörper und/oder dem Führungselement einstückig sein. Durch den Anschlag ergibt sich vorteilhafterweise ein wohldefinierter Drosselquerschnitt für das Dämpfungsfluid in der Öffnungsposition. Dadurch hat der Fluiddämpfer im Normalbetrieb, wenn sich die Ventilscheibe in der Öffnungsposition befindet, eine wohldefinierte Dämpfkraft.

Der Anschlag umfasst gemäß der Erfindung eine Anzahl von, beispielsweise ein, zwei, drei, vier, fünf oder mehr, Vorsprüngen zur Verkleinerung einer Kontaktfläche zwischen dem Anschlag und der Ventilscheibe. Die Vorsprünge sind beispielsweise halbkugelförmig oder konisch zulaufend, um minimale, insbesondere punktförmige, Kontaktflächen zwischen den Vorsprüngen und der Ventilscheibe zu erreichen. Dadurch wird eine möglichst konstante Anströmfläche der Ventilscheibe durch das Dämpfungsfluid während einer Verschiebung der Ventilscheibe erreicht. Eine konstante Anströmfläche führt zu einem präzisen Schaltvorgang mit einer geringen Toleranzempfindlichkeit.

Der Fluiddämpfer umfasst vorzugsweise ein zwischen der Ventilscheibe und dem Kolbengrundkörper angeordnetes Federelement, das die Ventilscheibe entlang der Hubachse in die Öffnungsposition drängt, wobei die Ventilscheibe vorzugsweise durch einen Überdruck in dem vorderen Teilraum relativ zu dem hinteren Teilraum gegen das Federelement von der Öffnungsposition in die Schließposition verschieblich ist, wenn der Überdruck einen Schaltdruck übersteigt. Das Federelement ist beispielsweise eine mechanische Feder, insbesondere eine Schraubendruckfeder.

Das Federelement stellt vorzugsweise sicher, dass sich die Ventilscheibe in der Öffnungsposition befindet, wenn in dem vorderen Teilraum kein den Schaltdruck übersteigende Überdruck herrscht. Dadurch hat der Fluiddämpfer im Normalbetrieb, wenn sich der Kolbengrundkörper mit einer Geschwindigkeit unterhalb der Schaltgeschwindigkeit in der Einschubrichtung oder in der Auszugsrichtung bewegt, jederzeit eine geringe Dämpfkraft.

Das Federelement ist vorzugsweise in einer Vertiefung des Kolbengrundkörpers, beispielsweise in einer zur Hubachse koaxialen Bohrung in dem Kolbengrundkörper, angeordnet. Die Anordnung in einer Vertiefung verhindert, dass das Federelement mit dem Zylinder in Kontakt kommt, wodurch das Schaltverhalten der Ventilscheibe beeinträchtigt werden könnte.

Die Vertiefung, in der das Federelement angeordnet ist, hat vorzugsweise einen kleineren Durchmesser quer zur Hubachse als die Ventilscheibe, sodass ein Rand der Vertiefung einen wohldefinierten Ventilsitz für die Ventilscheibe in der Schließposition bildet.

Die Vertiefung, in der das Federelement angeordnet ist, kann einen Abschnitt des Kanals bilden. Von der Vertiefung aus kann sich ein weiterer Abschnitt des Kanals, beispielsweise axial oder radial zur Hubachse, durch den Kolbengrundkörper erstrecken.

Der Fluiddämpfer zeichnet sich durch sehr präzise auslegbare Schalteigenschaften, beispielsweise eine präzise auslegbare Schaltgeschwindigkeit, und durch eine Entkoppelung der Schalteigenschaften von Reibungseinflüssen aus, da die Ventilscheibe einzig entgegen der Federkraft des Federelements bewegt werden muss.

Die Ventilscheibe kann in der Schließposition durch einen Überdruck in dem vorderen Teilraum relativ zu dem hinteren Teilraum derart verformbar, insbesondere elastisch verformbar, sein, dass die Ventilscheibe den zumindest einen Kanal freigibt, wenn der Überdruck einen Übersteuerungsdruck übersteigt. Dadurch wird eine Beschädigung des Fluiddämpfers, insbesondere der Ventilscheibe, durch einen zu hohe Überdruck, beispielsweise aufgrund einer Fehlbedienung des Fluiddämpfers, verhindert. Alternativ kann ein Schutz vor einem zu hohen Überdruck beispielsweise durch vordefinierte Leckagen, insbesondere an einer Dichtfläche zwischen der Ventilscheibe und dem Kolbengrundkörper, und/oder durch Schaltung eines zusätzlichen Bypass für das Dämpfungsfluid vom vorderen in den hinteren Teilraum vorgesehen sein.

Vorzugsweise ist die Ventilscheibe starr und besonders bevorzugt nicht mit einer zentralen Durchbrechung, einer zentralen Bohrung oder einem zentralen Bypass versehen. Dadurch wird ein besonders zuverlässiges und gut vorhersagbares Schaltverhalten der Ventilscheibe erreicht.

Die Ventilscheibe umfasst vorzugsweise einen Kunststoff oder besteht aus einem Kunststoff. Die Ventilscheibe ist vorzugsweise durch Spritzguss erhältlich. Aus Kunststoff, insbesondere durch Spritzguss, lässt sich eine besonders leichte Ventilscheibe auch mit einer von einer einfachen Kreisscheibe abweichenden Form kostengünstig herstellen. Eine geringe Masse der Ventilscheibe hat den Vorteil, sie mit geringem Kraftaufwand verschoben werden kann, woraus sich ein präzises Schaltverhalten ergibt.

Der Fluiddämpfer umfasst vorzugsweise ein zwischen der Ventilscheibe und dem Kolbengrundkörper angeordnetes Dichtelement, beispielsweise einen Dichtring, insbesondere einen O-Ring, das die Ventilscheibe in der Schließposition zum Kolbengrundkörper fluiddicht abdichtet.

In einer aufgrund ihrer einfachen Herstellung besonders bevorzugten Ausgestaltung ist zwischen der Ventilscheibe und dem Kolbengrundkörper kein separates Dichtelement angeordnet, sondern die Ventilscheibe liegt in der Schließposition direkt an dem Kolbengrundkörper an. Eine ausreichende Dichtwirkung kann beispielsweise durch ein geeignetes Material der Ventilscheibe, insbesondere ein gegenüber dem Kolbengrundkörper weicheres Material, bevorzugt einen Kunststoff, und/oder durch eine Beschichtung der Ventilscheibe und/oder des Kolbengrundkörpers erreicht werden.

Eine Kontaktfläche zwischen der Ventilscheibe und dem Kolbengrundkörper ist vorzugsweise ringförmig, um einen besonders einfach aufgebauten Schaltkolben und ein gut vorhersagbares Schaltverhalten zu erhalten.

Der Fluiddämpfer umfasst vorzugsweise eine an dem Kolbengrundkörper befestigte Kolbenstange, wobei die Kolbenstange bevorzugt durch eine Umformung an dem Kolbengrundkörper befestigt ist, wobei der Kolbengrundkörper besonders bevorzugt die Kolbenstange radial zur Hubachse abschnittsweise umschließt und durch eine Umformung auf die Hubachse zu, insbesondere in eine Nut der Kolbenstange, an der Kolbenstange befestigt ist. Eine Umformung auf die Hubachse zu hat gegenüber anderen Befestigungsmethoden, beispielsweise gegenüber einer Nietverbindung des Kolbengrundkörpers mit der Kolbenstange entlang der Hubachse, den Vorteil, dass dabei keine Kräfte auf die Ventilscheibe wirken, sodass die Schaltfunktion der Ventilscheibe nicht beeinträchtigt werden kann.

Der Kolbengrundkörper kann durch eine Nietverbindung an der Kolbenstange befestigt sein, wobei vorzugsweise eine Komplexität der Nietverbindung durch eine direkte einteilige Vernietung des Kolbengrundkörpers mit der Kolbenstange reduziert ist.

Eine Verbindung des Kolbengrundkörpers mit der Kolbenstange liegt vorzugsweise außerhalb eines Bewegungsbereichs der Ventilscheibe, sodass die Schaltfunktion der Ventilscheibe nicht durch die Verbindung beeinträchtigt wird.

Die Kolbenstange und/oder der Kolbengrundkörper besteht bevorzugt aus Aluminium und/oder aus Stahl.

Der Fluiddämpfer umfasst vorzugsweise jeweils zumindest ein Anschlusselement, beispielsweise eine Kugelpfanne, an dem Zylinder und an der Kolbenstange, um den Fluiddämpfer mechanisch an weitere Bauteilen, beispielsweise an eine Klappe und eine Karosserie eines Fahrzeugs, anzuschließen.

Der Fluiddämpfer umfasst vorzugsweise eine an dem Kolbengrundkörper angebrachte, bevorzugt um die Hubachse umlaufende, Dichtung, beispielsweise einen Dichtring, insbesondere einen O-Ring, die den Kolbengrundkörper zu der Mantelwand des Zylinders fluiddicht abdichtet. Die Dichtung stellt vorteilhafterweise sicher, dass das Dämpfungsfluid nicht zwischen dem Kolbengrund und der Mantelwand von dem vorderen in den hinteren Teilraum oder umgekehrt strömen kann. Somit wird das Dämpfungsverhalten des Fluiddämpfers ausschließlich durch den Strömungswiderstand auf das Dämpfungsfluid in dem Kanal bestimmt.

Das Verfahren zur Herstellung des Fluiddämpfers umfasst vorzugsweise zumindest ein Umformen des Kolbengrundkörpers des Fluiddämpfers auf die Hubachse des Fluiddämpfers zu zur Befestigung des Kolbengrundkörpers an der Kolbenstange des Fluiddämpfers. Daraus ergeben sich die weiter oben zur Umformung genannten Vorteile.

Das Verfahren umfasst vorzugsweise ein Spritzgießen oder ein Feinstanzverfahren der Ventilscheibe des Fluiddämpfers. Mit diesen Verfahren kann vorteilhafterweise eine Form der Ventilscheibe, die von einer einfachen Kreisscheibe, beispielsweise durch Aussparungen und/oder Erhebungen, abweicht wirtschaftlich gefertigt werden.

Die Erfindung betrifft eine Antriebsanordnung für eine Klappe eines Kraftfahrzeuges mit mindestens einem motorisierten Antrieb zur Bewegung der Klappe und mindestens einem erfindungsgemäßen Fluiddämpfer zur Unterstützung der Klappe. Der Fluiddämpfer ist vorzugsweise als Gasdruckfeder ausgestaltet, wobei die Gasdruckfeder in ein Federbein integriert sein kann.

Vorzugsweise ist der Fluiddämpfer so ausgelegt, dass die Ventilscheibe im Normalbetrieb der Antriebsanordnung in der Öffnungsposition ist, sodass der Fluiddämpfer eine geringe Dämpfkraft hat, und der motorisierte Antrieb die Klappe mit geringem Energieverbrauch bewegen kann.

Vorzugsweise ist der Fluiddämpfer so ausgelegt, dass die Ventilscheibe im Notfall, beispielsweise bei einem Auskoppeln oder Kraftverlust des motorisierten Antriebes, von der Öffnungsposition in die Schließposition verschoben wird, sodass sich die Dämpfkraft des Fluiddämpfers erhöht und die Klappe sich dadurch kontrolliert gebremst herabsenkt.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt einen schematischen Längsschnitt entlang der Hubachse einer Ausgestaltung des Fluiddämpfers.
Figur 2 zeigt einen schematischen Längsschnitt entlang der Hubachse einer Ausgestaltung des Schaltkolbens des Fluiddämpfers in der Öffnungsposition.
Figur 3 zeigt einen schematischen Längsschnitt entlang der Hubachse einer weiteren Ausgestaltung des Schaltkolbens des Fluiddämpfers in der Schließposition.
Figur 4 zeigt einen schematischen Längsschnitt entlang der Hubachse einer weiteren Ausgestaltung des Schaltkolbens des Fluiddämpfers in der Schließposition.
Figur 5 zeigt eine schematische Aufsicht entlang der Hubachse einer weiteren Ausgestaltung des Schaltkolbens des Fluiddämpfers.

### Fig.1

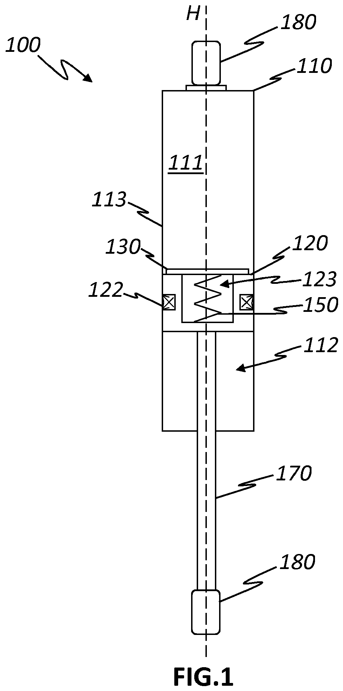

Figur 1 zeigt einen schematischen Längsschnitt entlang der Hubachse H einer Ausgestaltung des Fluiddämpfers 100.

Der Fluiddämpfer 100 umfasst einen mit einem Dämpfungsfluid (nicht dargestellt), beispielsweise mit einem Gas mit einem Überdruck, gefüllten Zylinder 110, einen in dem Zylinder 110 entlang einer Hubachse H verschieblich geführten Kolbengrundkörper 120 und eine von einer Mantelwand 113 des Zylinders 110 beabstandete Ventilscheibe 130.

Der Kolbengrundkörper 120 teilt einen Innenraum des Zylinders 110 entlang der Hubachse H in einen vorderen Teilraum 111 und einen hinteren Teilraum 112, wobei in dem Kolbengrundkörper 120 zumindest ein den vorderen Teilraum 111 mit dem hinteren Teilraum 112 fluidleitend verbindender Kanal (nicht dargestellt) angeordnet ist.

Der Fluiddämpfer 100 umfasst eine an dem Kolbengrundkörper 120 angebrachte und um die Hubachse H umlaufende Dichtung 122, die den Kolbengrundkörper 120 zu der Mantelwand 113 des Zylinders 110 fluiddicht abdichtet.

Die Ventilscheibe 130 ist relativ zu dem Kolbengrundkörper 120 entlang der Hubachse H zwischen einer den zumindest einen Kanal 121 freigebenden Öffnungsposition und einer den zumindest einen Kanal 121 verschließenden Schließposition verschieblich geführt.

Der Fluiddämpfer 100 umfasst ein zwischen der Ventilscheibe 130 und dem Kolbengrundkörper 120 angeordnetes Federelement 150, beispielsweise eine Schraubendruckfeder. Das Federelemente 150 drängt die Ventilscheibe 130 entlang der Hubachse H in die Öffnungsposition, wobei die Ventilscheibe 130 durch einen Überdruck in dem vorderen Teilraum 111 relativ zu dem hinteren Teilraum 112 gegen das Federelement 150 von der Öffnungsposition in die Schließposition verschieblich ist, wenn der Überdruck einen Schaltdruck übersteigt.

Das Federelement 150 ist in einer Vertiefung 123, beispielsweise in einer zur Hubachse H koaxialen Bohrung, in dem Kolbengrundkörper 120 angeordnet.

Der Fluiddämpfer 100 umfasst eine an dem Kolbengrundkörper 120 befestigte Kolbenstange 170, die durch den hinteren Teilraum 112 aus dem Zylinder 110 herausgeführt ist.

An dem nicht an dem Kolbengrundkörper 120 befestigten Ende der Kolbenstange 170 sowie an dem Ende des Zylinders 110, an dem die Kolbenstange 170 nicht aus dem Zylinder 110 geführt ist, ist jeweils ein Anschlusselement 180, beispielsweise eine Kugelpfanne, angeordnet, um den Fluiddämpfer 100 mechanisch an weitere Bauteilen, beispielsweise an eine Klappe und eine Karosserie eines Fahrzeugs, anzuschließen

### Fig.2

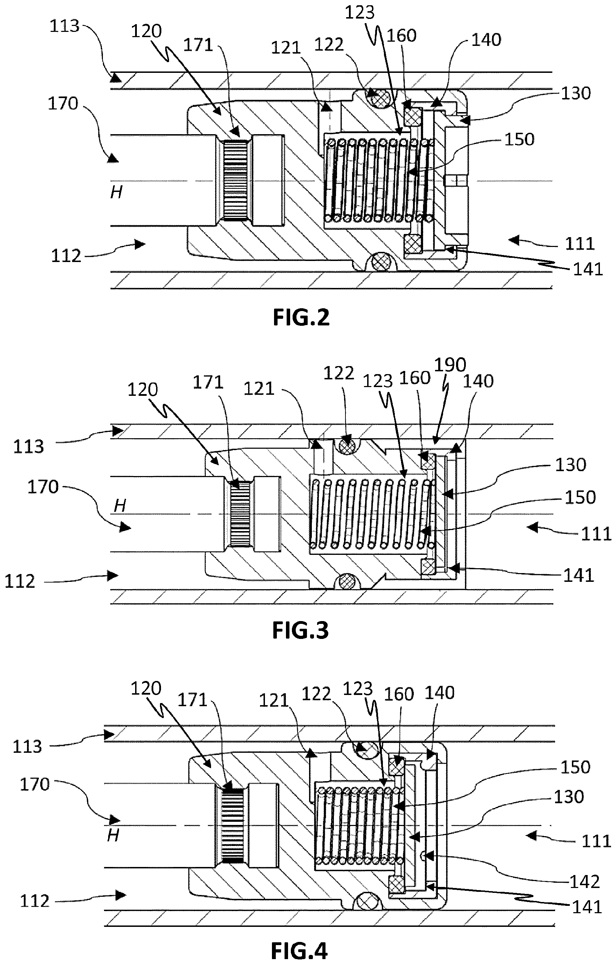

Figur 2 zeigt einen schematischen Längsschnitt entlang der Hubachse einer Ausgestaltung des Schaltkolbens des Fluiddämpfers 100 in der Öffnungsposition. Bereits in Figur 1 gezeigte Komponenten sind mit den gleichen Bezugszeichen wie in Figur 1 versehen und nicht erneut beschrieben.

In Figur 2 ist der Kanal 121 in dem Kolbengrundkörper 120 dargestellt, der den vorderen Teilraum 111 mit dem hinteren Teilraum 112 fluidleitend verbindet. Der Kanal 121 umfasst beispielsweise eine Bohrung radial zur Hubachse H, die die Vertiefung 123, in der das Federelement 150 angeordnet ist, fluidleitend mit dem hinteren Teilraum 112 verbindet.

Der in Figur 2 gezeigte Fluiddämpfer 100 umfasst ein an dem Kolbengrundkörper 120 befestigtes und zwischen der Ventilscheibe 130 und einer Mantelwand 113 des Zylinders 110 angeordnetes Führungselement 140, beispielsweise eine zur Hubachse H koaxiale Führungshülse. Das Führungselement 140 führt die Ventilscheibe 130 entlang der Hubachse H verschieblich zwischen der in Figur 2 gezeigten Öffnungsposition und der Schließposition.

Das Führungselement 140 umfasst einen Anschlag 141, beispielsweise einen um die Hubachse H umlaufenden und zur Hubachse H hin gerichteten Vorsprung, zur Begrenzung der Verschieblichkeit der Ventilscheibe 130 relativ zu dem Kolbengrundkörper 120 in einer Öffnungsrichtung von der Schließposition zur Öffnungsposition.

In der in Figur 2 gezeigten Ausgestaltung umschließt der Kolbengrundkörper 120 die Kolbenstange 170 radial zur Hubachse H abschnittsweise. Der Kolbengrundkörper 120 ist durch eine Umformung auf die Hubachse H zu in eine Nut 171 der Kolbenstange 170 an der Kolbenstange 170 befestigt.

### Fig.3

Figur 3 zeigt einen schematischen Längsschnitt entlang der Hubachse H einer weiteren Ausgestaltung des Schaltkolbens des Fluiddämpfers 100 in der Schließposition. Die bereits in Figur 1 oder 2 dargestellten Komponenten sind mit den gleichen Bezugszeichen wie dort versehen und werden nicht erneut beschrieben.

Der in Figur 3 gezeigte Fluiddämpfer 100 umfasst ein Halteelement 190 zur Halterung des Führungselements 140 an dem Kolbengrundkörper 120. Das Halteelement 190 ist beispielsweise über eine Rastverbindung mit dem Kolbengrundkörper 120 und formschlüssig mit dem Führungselement 140 verbunden.

### Fig.4

Figur 4 zeigt einen schematischen Längsschnitt entlang der Hubachse einer weiteren Ausgestaltung des Schaltkolbens des Fluiddämpfers 100 in der Schließposition. Die bereits in Figur 1, 2 oder 3 dargestellten Komponenten sind mit den gleichen Bezugszeichen wie dort versehen und werden nicht erneut beschrieben.

In der in Figur 4 gezeigten Ausgestaltung umfasst der Anschlag 141 für die Ventilscheibe 130 eine Anzahl von, beispielsweise drei, Vorsprüngen 142 zur Verkleinerung einer Kontaktfläche zwischen dem Anschlag 141 und der Ventilscheibe 130. Die Vorsprünge 142 sind beispielsweise halbkugelförmig.

### Fig.5

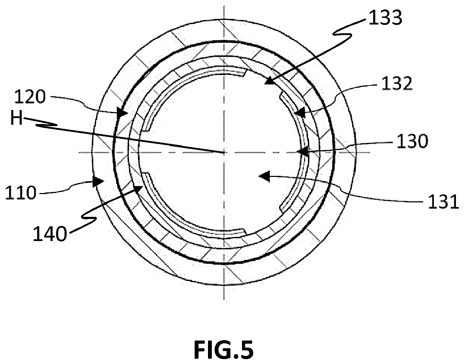

Figur 5 zeigt eine schematische Aufsicht entlang der Hubachse H einer weiteren Ausgestaltung des Schaltkolbens des Fluiddämpfers 100. Die bereits in Figur 1, 2, 3 oder 4 dargestellten Komponenten sind mit den gleichen Bezugszeichen wie dort versehen und werden nicht erneut beschrieben.

In Figur 5 ist sichtbar, dass die Ventilscheibe 130 einen sich von der Hubachse H radial nach außen erstreckenden Zentralbereich 131 aufweist, wobei der Zentralbereich 131 durchbrechungsfrei, also ohne Durchbrechungen entlang der Hubachse H, ist.

Außerhalb des Zentralbereichs 131 weist die in Figur 5 gezeigte Ventilscheibe 130 eine Anzahl von, beispielsweise drei, Aussparungen 132 zum Durchtritt des Dämpfungsfluides entlang der Hubachse H durch die Ventilscheibe 130 auf. Die Aussparungen 132 sind beispielsweise ringsegmentförmig und radial von der Hubachse H nach außen offen.

Zwischen benachbarten Aussparungen 132 ist jeweils ein Steg 133 angeordnet, der zur Führung der Ventilscheibe 130 an dem Führungselement 140 dienen kann.

### Liste der Bezugszeichen

| | | | |
|---|---|---|---|
| 100 | Fluiddämpfer | 140 | Führungselement |
| 110 | Zylinder | 141 | Anschlag |
| 111 | vorderer Teilraum | 142 | Vorsprung |
| 112 | hinterer Teilraum | 150 | Federelement |
| 113 | Mantelwand | 160 | Dichtelement |
| 120 | Kolbengrundkörper | 170 | Kolbenstange |
| 121 | Kanal | 171 | Nut |
| 122 | Dichtung | 180 | Anschlusselement |
| 123 | Vertiefung | 190 | Halteelement |
| 130 | Ventilscheibe | H | Hubachse |
| 131 | Zentralbereich | | |
| 132 | Aussparung | | |
| 133 | Steg | | |

## Patentansprüche

1. Fluiddämpfer (100), umfassend
a. einen mit einem Dämpfungsfluid gefüllten Zylinder (110),
b. einen in dem Zylinder (110) entlang einer Hubachse (H) verschieblich geführten Kolbengrundkörper (120) und
c. eine von einer Mantelwand (113) des Zylinders (110) beabstandete Ventilscheibe (130),
d. wobei der Kolbengrundkörper (120) einen Innenraum des Zylinders (110) entlang der Hubachse (H) in einen vorderen Teilraum (111) und einen hinteren Teilraum (112) teilt,
e. wobei in dem Kolbengrundkörper (120) zumindest ein den vorderen Teilraum (111) mit dem hinteren Teilraum (112) fluidleitend verbindender Kanal (121) angeordnet ist,
f. wobei die Ventilscheibe (130) relativ zu dem Kolbengrundkörper (120) entlang der Hubachse (H) zwischen einer den zumindest einen Kanal (121) freigebenden Öffnungsposition und einer den zumindest einen Kanal (121) verschließenden Schließposition verschieblich geführt ist,
g. wobei die Ventilscheibe (130) einen sich von der Hubachse (H) radial nach außen erstreckenden Zentralbereich (131) aufweist,
h. wobei der Zentralbereich (131) durchbrechungsfrei ist,
i. einen an dem Kolbengrundkörper (120) befestigten Anschlag (141) zur Begrenzung der Verschieblichkeit der Ventilscheibe (130) relativ zu dem Kolbengrundkörper (120) in einer Öffnungsrichtung von der Schließposition zur Öffnungsposition,
j.**dadurch gekennzeichnet, dass**
der Anschlag (141) eine Anzahl von halbkugelförmigen oder konisch zulaufenden Vorsprüngen (142) zur Verkleinerung einer Kontaktfläche zwischen dem Anschlag (141) und der Ventilscheibe (130) umfasst.

2. Fluiddämpfer (100) nach Anspruch 1,
**dadurch gekennzeichnet, dass**
sich der durchbrechungsfreie Zentralbereich (131) von der Hubachse (H) bis zu einem Zentralbereichsradius (ZR) nach außen erstreckt, wobei der Zentralbereichsradius (ZR) von 50 % bis 100 %, bevorzugt von 75 % bis 98 %, besonders bevorzugt von 85 % bis 95 %, eines zur Hubachse (H) radialen Ventilscheibenradius (VR) der Ventilscheibe (130) beträgt.

3. Fluiddämpfer (100) nach Anspruch 1 oder 2,
**dadurch gekennzeichnet, dass**
die Ventilscheibe (130) außerhalb des Zentralbereichs (131) eine Anzahl von Aussparungen (132) zum Durchtritt des Dämpfungsfluides entlang der Hubachse (H) durch die Ventilscheibe (130) aufweist.

4. Fluiddämpfer (100) nach Anspruch 3,
**dadurch gekennzeichnet, dass**
die Aussparungen (132) ringsegmentförmig und/oder radial von der Hubachse (H) nach außen offen sind.

5. Fluiddämpfer (100) nach einem der Ansprüche 1 bis 4,
**gekennzeichnet durch**
ein an dem Kolbengrundkörper (120) befestigtes und zwischen der Ventilscheibe (130) und einer Mantelwand (113) des Zylinders (110) angeordnetes Führungselement (140), wobei das Führungselement (140) die Ventilscheibe (130) entlang der Hubachse (H) zwischen der Öffnungsposition und der Schließposition verschieblich führt.

6. Fluiddämpfer (100) nach einem der Ansprüche 1 bis 5,
**gekennzeichnet durch**
ein zwischen der Ventilscheibe (130) und dem Kolbengrundkörper (120) angeordnetes Federelement (150), das die Ventilscheibe (130) entlang der Hubachse (H) in die Öffnungsposition drängt, wobei die Ventilscheibe (130) durch einen Überdruck in dem vorderen Teilraum (111) relativ zu dem hinteren Teilraum (112) gegen das Federelement (150) von der Öffnungsposition in die Schließposition verschieblich ist, wenn der Überdruck einen Schaltdruck übersteigt.

7. Fluiddämpfer (100) nach Anspruch 6,
**dadurch gekennzeichnet, dass**
das Federelement (150) in einer Vertiefung (123) in dem Kolbengrundkörper (120) angeordnet ist.

8. Fluiddämpfer (100) nach Anspruch 7,
**dadurch gekennzeichnet, dass**
die Vertiefung (123) quer zur Hubachse (H) einen kleineren Durchmesser hat als die Ventilscheibe (130).

9. Fluiddämpfer (100) nach einem der Ansprüche 1 bis 8,
**dadurch gekennzeichnet, dass**
die Ventilscheibe (130) in der Schließposition durch einen Überdruck in dem vorderen Teilraum (111) relativ zu dem hinteren Teilraum (112) derart elastisch verformbar ist, dass die Ventilscheibe (130) den zumindest einen Kanal (121) freigibt, wenn der Überdruck einen Übersteuerungsdruck übersteigt.

10. Fluiddämpfer (100) nach einem der Ansprüche 1 bis 9,
**dadurch gekennzeichnet, dass**
die Ventilscheibe (130) in der Schließposition direkt an dem Kolbengrundkörper (120) anliegt, wobei eine Kontaktfläche zwischen der Ventilscheibe (130) und dem Kolbengrundkörper (120) bevorzugt ringförmig ist.

11. Fluiddämpfer (100) nach einem der Ansprüche 1 bis 10,
**gekennzeichnet durch**
eine an dem Kolbengrundkörper (120) befestigte Kolbenstange (170) wobei der Kolbengrundkörper (120) die Kolbenstange (170) radial zur Hubachse (H) abschnittsweise umschließt und durch eine Umformung auf die Hubachse (H) zu, insbesondere in eine Nut (171) der Kolbenstange (170), an der Kolbenstange (170) befestigt ist.

12. Verfahren zur Herstellung des Fluiddämpfers (100) nach Anspruch 11,
**gekennzeichnet durch** folgenden Schritt:
Umformen des Kolbengrundkörpers (120) des Fluiddämpfers (100) auf die Hubachse (H) des Fluiddämpfers (100) zu zur Befestigung des Kolbengrundkörpers (120) an der Kolbenstange (170) des Fluiddämpfers (100).

13. Antriebsanordnung für eine Klappe eines Kraftfahrzeuges, umfassend mindestens einen motorisierten Antrieb zur Bewegung der Klappe,
**gekennzeichnet durch**
mindestens einen Fluiddämpfer (100) nach einem der Ansprüche 1 bis 11 zur Unterstützung der Klappe.

## Claims

1. A fluid damper (100), comprising
a. a cylinder (110) filled with a damping fluid,
b. a piston base body (120) shiftably guided in the cylinder (110) along a stroke axis (H), and
c. a valve disk (130) spaced apart from a shell wall (113) of the cylinder (110),
d. the piston base body (120) dividing an inner space of the cylinder (110) into a front space (111) and a rear space (112) along the stroke axis (H),
e. at least one channel (121) connecting the front space (111) to the rear space (112) in a fluid-conducting manner being arranged in the piston base body (120),
f. the valve disk (130) being shiftably guided relative to the piston base body (120) along the stroke axis (H) between an opening position unblocking the at least one channel (121) and a closing position closing the at least one channel (121),
g. the valve disk (130) having a central area (131) extending radially outward from the stroke axis (H),
h. the central area (131) being free of apertures,
i. the fluid damper (100) comprising a stopper (141) attached to the piston base body (120) for limiting the shiftability of the valve disk (130) relative to the piston base body (120) in an opening direction from the closing position to the opening position,
**characterised in that**
j. the stopper (141) comprising a number of semi-spherical or conically tapered protrusions (142) for reducing a contact surface between the stopper (141) and the valve disk (130).

2. The fluid damper (100) according to claim 1,
**characterised in that**
the aperture-free central area (131) extends outwards from the stroke axis (H) up to a central area radius (ZR), the central area radius (ZR) amounting to 50 % to 100 %, preferably 75 % to 98 %, more preferably 85 % to 95 %, of a valve disk radius (VR) of the valve disk (130) radial to the stroke axis (H).

3. The fluid damper (100) according to claim 1 or 2,
**characterised in that**
the valve disk (130) has a number of apertures (132) for the passage of the damping fluid through the valve disk (130) along the stroke axis (H) outside of the central area (131).

4. The fluid damper (100) according to claim 3,
**characterised in that**
the number of apertures (132) are ring segment-shaped and/or radially open towards the outside from the stroke axis (H).

5. The fluid damper (100) according to any one of claims 1 to 4,
**characterised by**
a guide member (140) fixed to the piston base body (120) and arranged between the valve disk (130) and a shell wall (113) of the cylinder (110), the guide member (140) shiftably guiding the valve disk (130) along the stroke axis (H) between the opening position and the closing position.

6. The fluid damper (100) according to any one of claims 1 to 5,
**characterised in that**
the fluid damper (100) comprises a spring member (150) arranged between the valve disk (130) and the piston base body (120) which urges the valve disk (130) into the opening position along the stroke axis (H), the valve disk (130) being shiftable from the opening position into the closing position against the spring member (150) by a positive pressure in the front space (111) relative to the rear space (112) when the positive pressure exceeds a switching pressure.

7. The fluid damper (100) according to claim 6,
**characterised in that**
the spring member (150) is arranged in a recess (123) in the piston base body (120).

8. The fluid damper (100) according to claim 7,
**characterised in that**
the recess (123) has a smaller diameter than the valve disk (130) transverse to the stroke axis (H).

9. The fluid damper (100) according to any one of claims 1 to 8,
**characterised in that**
the valve disk (130) is elastically deformable in the closing position by a positive pressure in the front space (111) relative to the rear space (112) so that the valve disk (130) unblocks the at least one channel (121) when the positive pressure exceeds an override pressure.

10. The fluid damper (100) according to any one of claims 1 to 9,
**characterised in that**
the valve disk (130) directly abuts on the piston base body (120) in the closing position, a contact surface between the valve disk (130) and the piston base body (120) preferably being ring-shaped.

11. The fluid damper (100) according to any one of claims 1 to 10,
**characterised in that**
the fluid damper (100) comprises a piston rod (170) fixed to the piston base body (120), the piston base body (120) sectionally enclosing the piston rod (170) radial to the stroke axis (H) and being fixed to the piston rod (170) by deforming the piston base body (120) towards the stroke axis (H), preferably into a groove (171) of the piston rod (170).

12. A method for manufacturing the fluid damper (100) according to claim 11, **characterised by** the following step:
deforming the piston base body (120) of the fluid damper (100) towards the stroke axis (H) of the fluid damper (100) for fixing the piston base body (120) to the piston rod (170) of the fluid damper (100).

13. A drive arrangement for a flap of a motor vehicle comprising at least one motorised drive for moving the flap,
**characterised in that**
the drive arrangement comprises at least one fluid damper (100) according to one of the claims 1 to 11 for supporting the flap.

## Revendications

1. Amortisseur à fluide (100) comprenant
a. un cylindre (110) rempli d'un fluide amortisseur,
b. un corps de base de piston (120) qui est guidé de manière mobile dans le cylindre (110) le long d'un axe de course (H) et
c. un disque de valve (130) espacé d'une paroi d'enveloppe (113) du cylindre (110),
d. le corps de base de piston (120) divisant un intérieur du cylindre (110) le long de l'axe de course (H) en un sous-espace avant (111) et un sous-espace arrière (112),
e. au moins un canal (121) qui relie de façon conduisant le fluide le sous-espace avant (111) au sous-espace arrière (112) étant disposé dans le corps de base de piston (120),
f. le disque de valve (130) étant guidé de manière mobile par rapport au corps de base de piston (120) le long de l'axe de course (H) entre une position d'ouverture libérant ledit au moins un canal (121) et une position de fermeture fermant ledit au moins un canal (121),
g. le disque de valve (130) présentant une région centrale (131) s'étendant radialement vers l'extérieur à partir de l'axe de course (H),
h. la zone centrale (131) étant exempte d'ouvertures,
i. une butée (141) étant fixée au corps de base de piston (120) pour limiter le déplacement du disque de valve (130) par rapport au corps de base de piston (120) dans une direction d'ouverture depuis la position fermée vers la position ouverte,
**caractérisé en ce que**
j. la butée (141) comprend un certain nombre de saillies hémisphériques ou coniques (142) pour réduire une zone de contact entre la butée (141) et le disque de valve (130).

2. Amortisseur à fluide (100) selon la revendication 1,
**caractérisé en ce que**
la région centrale (131) ininterrompue s'étend vers l'extérieur depuis l'axe de course (H) jusqu'à un rayon de région centrale (ZR), le rayon de région centrale (ZR) étant compris entre 50 % et 100 %, de préférence de 75 % à 98 %, de manière particulièrement préférée de 85 % à 95 %, d'un rayon de disque de valve (VR) du disque de valve (130) qui est radial par rapport à l'axe de course (H).

3. Amortisseur à fluide (100) selon la revendication 1 ou 2,
**caractérisé en ce que**
le disque de valve (130) présente à l'extérieur de la zone centrale (131) un certain nombre d'évidements (132) pour le passage du fluide amortisseur le long de l'axe de course (H) à travers le disque de valve (130).

4. Amortisseur à fluide (100) selon la revendication 3,
**caractérisé en ce que**
les évidements (132) sont en forme de segment annulaire et/ou s'ouvrent radialement vers l'extérieur à partir de l'axe de levage (H).

5. Amortisseur à fluide (100) selon l'une des revendications 1 à 4, **caractérisé par**
un élément de guidage (140) fixé au corps de base du piston (120) et disposé entre le disque de valve (130) et une paroi d'enveloppe (113) du cylindre (110), l'élément de guidage (140) guidant le disque de valve (130) de façon déplaçable le long de l'axe de course (H) entre la position d'ouverture et la position de fermeture.

6. Amortisseur à fluide (100) selon l'une des revendications 1 à 5, **caractérisé par**
un élément ressort (150) disposé entre le disque de valve (130) et le corps de base du piston (120), qui pousse le disque de valve (130) vers la position d'ouverture le long de l'axe de course (H), le disque de valve (130) pouvant être déplacé de la position d'ouverture à la position de fermeture contre l'élément à ressort (150) par une surpression dans le sous-espace avant (111) par rapport au sous-espace arrière (112) lorsque la surpression dépasse une pression de commutation.

7. Amortisseur à fluide (100) selon la revendication 6,
**caractérisé en ce que**
l'élément ressort (150) est disposé dans un creux (123) du corps de base du piston (120).

8. Amortisseur à fluide (100) selon la revendication 7,
**caractérisé en ce que**
le creux (123) présente un diamètre transversal à l'axe de course (H) plus petit que le disque de valve (130).

9. Amortisseur à fluide (100) selon l'une des revendications 1 à 8,
**caractérisé en ce que**
le disque de valve (130) en position de fermeture est élastiquement déformable par une surpression dans le sous-espace avant (111) par rapport au sous-espace arrière (112) d'une manière que le disque de valve (130) libère l'au moins an canal (121) lorsque la surpression dépasse une pression de surmodulation.

10. Amortisseur à fluide (100) selon l'une des revendications 1 à 9,
**caractérisé en ce que**
le disque de valve (130) repose directement sur le corps de base du piston (120) en position de fermeture, une surface de contact entre le disque de valve (130) et le corps de base du piston (120) étant de préférence annulaire.

11. Amortisseur à fluide (100) selon l'une des revendications 1 à 10,
**caractérisé par**
une tige de piston (170) fixée au corps de base de piston (120), le corps de base de piston (120) entourant la tige de piston (170) par sections radialement par rapport à l'axe de course (H) et étant fixée sur la tige de piston (170) par une déformation vers l'axe de course (H), de préférence dans une rainure (171) de la tige de piston (170).

12. Procédé de fabrication de l'amortisseur à fluide (100) selon la revendication 11,
**caractérisé par** l'étape suivante :
déformer le corps de base de piston (120) de l'amortisseur à fluide (100) vers l'axe de course (H) de l'amortisseur à fluide (100) afin de fixer le corps de base de piston (120) à la tige de piston (170) de l'amortisseur à fluide (100).

13. Dispositif d'entraînement pour un volet de véhicule automobile, comprenant au moins un entraînement motorisé pour déplacer le volet,
**caractérisé par**
au moins un amortisseur à fluide (100) selon l'une des revendications 1 à 11 pour supporter le volet.
